# EUROPEAN PATENT APPLICATION

(11) **EP 1 978 771 A1**
(43) Date of publication of application: **08.10.2008**
(21) Application number: 07105805.1
(22) Date of filing: 05.04.2007
(51) Int. Cl.: H04Q 7/38

(54) **Location detection**

(71) Applicant: Nederlandse Organisatie voor Toegepast-Natuurwetenschappelijk Onderzoek TNO, 2628 VK Delft (NL)
(72) Inventor: Busropan, Bryan Jerrel, 2492 MR Den Haag (NL); van Loon, Johannes Maria, 2719 JE Zoetermeer (NL)
(74) Representative: van Loon, C.J.J.

(57) **Abstract**

A method of obtaining location information from at least one mobile communication device (2) in a system (100) for mobile communication comprising a central unit (T) capable of communicating with the mobile communication device, the method comprising the steps of
**•** the mobile communication device repeatedly monitoring the identification of the current cell (3),
**•** the mobile communication device, upon detecting a change of the current cell, sending a location message to the central unit, the location message containing the identification of the new cell (3'),
**•** the central unit registering the location message together with its time of receipt, and
• the central unit determining the location of the mobile unit based upon the registered location messages, times of receipt and predetermined cell data.

## Description

The present invention relates to location detection. More in particular, the present invention relates to a method and system for detecting the location of mobile (cellular) communication devices, such as GSM or UMTS mobile telephones.

It is already known to detect the location of mobile communication devices, such as mobile (cellular) telephones. It is also known to track the location of such devices in order to determine traffic patterns on highways.

United States Patent US 6 052 597, for example, discloses a method of determining the position of a mobile communication device. In this known method, the central unit (mobile switching centre) polls the mobile devices by sending SMS messages, in response to which the mobile devices simulate a call set-up. The SMS messages also command the mobile devices to carry out a position determining sequence. As soon as the central unit receives a paging response containing the present cell identification, the call set-up is terminated. This known method has several disadvantages. A large number of messages are exchanged between the central unit and the mobile devices: polling SMS messages and paging responses. In addition, the central unit may also poll the mobile devices if no new information is available, that is, if the mobile device has not moved or has not left its cell. As a result, this known method is not very efficient and needlessly claims valuable resources.

European Patent EP 0 927 411 discloses a method of collecting traffic data from vehicles using mobile communication devices. When moving, the mobile devices register information characterising cell changes, as well as time stamps indicative of the points in time at which the cell changes take place. At some point in time, the registered data, including the time stamps, are transmitted to the central unit (exchange). This point in time at which transmission of the data stored in the mobile device takes place is not well defined and may depend on various factors. As a result, the transmitted data will not always be up-to-date. In addition, this known method suffers from the drawback that the time stamps are produced by the mobile devices. As the time clocks of mobile devices may deviate from each other and from the time clock of the mobile network, time stamps produced by the mobile devices may be unreliable. As a result, any traffic information derived from such time stamps may also be incorrect. Furthermore, EP 0 927 411 does not disclose how cell changes are detected, or whether the method can be used when the mobile units are in idle mode, that is, switched on but not active. As only a relatively small number of mobile communication devices are active at any point in time, while many more are idle, tracking idle handsets provides much more location information.

It is an object of the present invention to overcome these and other problems of the Prior Art and to provide a method and system for determining the location of mobile communication devices, which method and system have an improved accuracy and can be used in idle mode.

It is another object of the present invention to provide a method and system for determining the location of mobile communication devices which relies solely on the mobile communication system, without requiring additional location detection apparatus, such as GPS (Global Positioning System) apparatus.

It is a further object of the present invention to provide a mobile communication device, and a software program product for use in a mobile communication device, designed for use in the method and system according to the present invention.

Accordingly, the present invention provides a method of obtaining location information from at least one mobile communication device in a system for mobile communication comprising a central unit capable of communicating with the mobile communication device, the method comprising the steps of:
- the mobile communication device repeatedly monitoring the identification of the current cell,
- the mobile communication device, upon detecting a change of the current cell, sending a location message to the central unit, the location message containing the identification of the new cell,
- the central unit registering the location message together with its time of receipt, and
- the central unit determining the location of the mobile unit based upon the registered location messages, times of receipt and predetermined cell data.
By sending a location message each time when the mobile device detects a cell change (that is, a change of the identity of the current cell) and registering the point in time at which the location message is received by the central unit, the points in time of the cell changes can be reliably registered, independently from the internal time clock of the individual mobile device. It is therefore preferred that the mobile device transmits the location messages immediately upon detection of a cell change. Alternatively, the location messages can be transmitted after a short delay having a fixed duration, resulting in a constant time offset.

In the method of the present invention, no GPS data and no polling messages are transmitted, thus reducing the amount of transmitted information. It has been found that cell transition data alone provide sufficient location information for most purposes, in particular for studying traffic flows. In addition, no time information needs to be transmitted in the method of the present invention, as the "time stamp" of the cell transition is provided by the central unit. Such centralised cell transition time detection produces reliable and uniform results. In the method of the present invention, there is no polling of the mobile devices as the mobile devices produce the location messages autonomously in response to the detection of a cell transition.

As the cell transitions are detected by the mobile telephones, the need for the network to detect these transitions is removed. In most types of mobile networks, cell transitions of idle mobile devices are not detected by the network, only the cell transitions of active mobile devices are detected and registered. The present invention therefore also provides a method of detecting cell transitions for idle mobile devices.

The cell transitions are preferably detected on the basis of the signal strength of the cells. Each cell has a base station and at least one transceiver unit. The signal strength of this transceiver unit can be measured by the mobile device. On the basis of this measurement, the mobile device selects the cell having the greatest signal strength, thus ensuring the best signal reception.

When the signal strength of the selected cell drops below a certain threshold, the mobile device will attempt to select another cell. This will also happen when the signal strength of another cell exceeds the signal strength of the current cell by a certain amount. Accordingly, a drop in the signal strength of the current cell and a surge in the signal strength of another cell will typically indicate a cell transition. As a result of the cell transitions, the mobile device will typically receive the signal of the cell providing the greatest signal strength at a particular location. Since the signal of each cell contains information identifying the cell, the selected cell providing the greatest signal strength can be identified. In accordance with the present invention, the mobile device transmits cell identification information of the new cell to the central unit, thus notifying a cell transition. As cell boundaries are known and stored in the central unit as part of the cell data, the location of the mobile device can be determined.

The messages the mobile device sends to the central unit are preferably USSD (Unstructured Supplementary Service Data) messages or SMS (Short Message Service) messages in GSM networks, or similar message formats in UMTS and other mobile networks. USSD or equivalent messages are preferred as there is no store-and-forward facility for USSD messages in GSM, as a result of which response times are shorter than for SMS messages. However, if rapid location updates in the central unit are not required, SMS messages are very suitable.

Advantageously, the central unit contains a location unit for registering, and for determining the location of a mobile communication device using the location messages and their times of receipt registered by the central unit. Thus the location unit provides the additional functions necessary to practice the method of the present invention in a conventional mobile communication system. The location unit may also be arranged for registering the times of receipt of the location messages.

The location unit, or another part of the central unit, may store a fingerprint of an itinerary. Matching this fingerprint with location data derived from cell transition data allows a particular itinerary to be recognised.

The present invention also provides at least one computer program product for carrying out the method as defined above. A computer program product may comprise a set of computer executable instructions stored on a data carrier, such as a CD or a DVD. The set of computer executable instructions, which allow a programmable computer to carry out the method as defined above, may also be available for downloading from a remote server, for example via the Internet.

In fact the present invention provides at least two computer program products, one for use in the mobile communication device and one for use in the central unit.

The present invention further provides a system for mobile communication, comprising at least one mobile communication device and a central unit capable of communicating with the mobile communication device, wherein:
- the mobile communication device is arranged for repeatedly monitoring the identification of the current cell,
- the mobile communication device is arranged for, upon detecting a change of the current cell, sending a location message to the central unit, the location message containing the identification of the new cell,
- the central unit is arranged for registering the location message together with its time of receipt, and
- the central unit is arranged for determining the location of the mobile unit based upon the registered location messages, times of receipt and predetermined cell data.
The system of the present invention has the same advantages as the method discussed above.

In addition, the present invention provides a device for mobile communication, arranged for use in the method and/or the system defined above. The mobile communication device preferably comprises an identity module (such as a SIM card) in which a software program is stored, the software program being designed to cause the device, upon detecting a change of the current cell, to send a location message to the central unit, the location message containing the identification of the new cell.

The present invention will further be explained below with reference to exemplary embodiments illustrated in the accompanying drawings, in which:
Fig. 1 schematically shows a system for mobile communication adapted for obtaining location information in accordance with the present invention.
Fig. 2 schematically shows a trajectory of a mobile communication device traversing cell of the mobile communication system of Fig. 1.
Fig. 3 schematically shows the signal strength of the cells of Fig. 2 as determined by the mobile communication device.

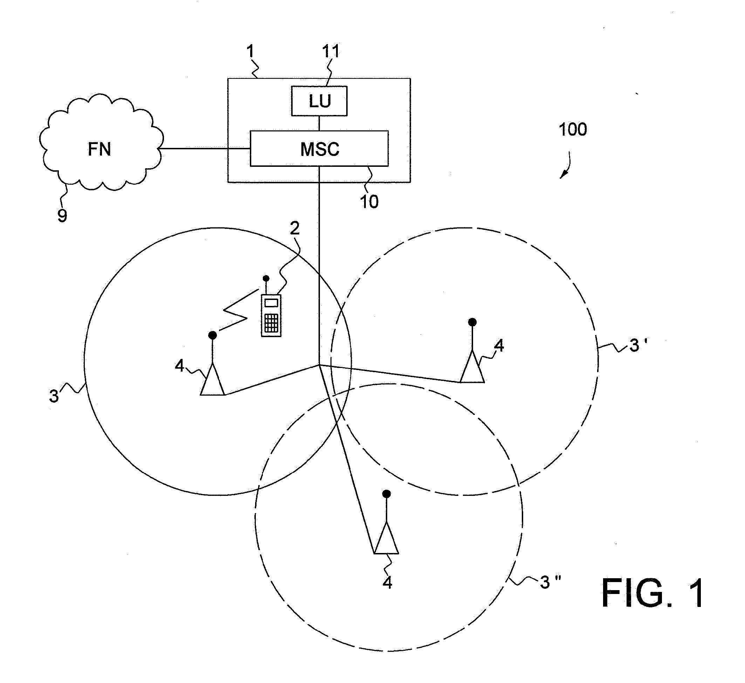

The mobile communication system 100 shown merely by way of non-limiting example in Fig. 1 comprises a central unit 1 and base stations 4. The base stations 4 each define a cell 3 (3', 3") in which the central unit 1 can wirelessly communicate with a mobile communication device (handset) 2. The mobile communication system 100 may be arranged in accordance with GSM, UMTS or any other suitable standard. Although only a single mobile communication device (handset) 2 is shown in Fig. 1, a plurality of mobile devices may be present in each cell. The base stations 4 are each shown as a single unit for the sake of clarity but may each comprise two or more units, including transmission units.

The central unit 1 comprises a mobile switching centre (MSC) 10 which is connected to the base stations 4 and a fixed or landline network (FN) 9 via cables or other links. The mobile switching centre 10 is capable of controlling and setting up connections between the mobile communication units 2 and the fixed network 9. In addition, the mobile switching centre 10 is capable of wireless communication with the mobile communication devices 2, both as part of the communication with the fixed network 9 and for the exchange of messages, such as text messages (Short Message Service, SMS in GSM) and control data, such as identification data.

In accordance with the present invention, the central unit 1 also comprises a location unit (LU) 11 which is coupled to the mobile switching centre 10. The location unit 11 may be constituted by a regular general purpose computer (PC) running a suitable software program, or by a dedicated device. Such a dedicated device preferably comprises a processor and an associated memory for storing a software program designed for carrying out method steps of the present invention.

The location unit 11 is arranged for receiving, registering and/or processing location information contained in messages sent by the mobile devices, as will be explained below.

When the mobile communication device 2 is present and switched on in the cell 3, it is capable of communicating with the central unit 1 through the base station 4. To this end, the mobile communication device 2 is registered at the so-called location area (group of cells) to which the particular cell (3 in the present example) belongs. This registration allows the central unit 1 to send messages and calls to the appropriate group of cells. Registration is typically carried out automatically when the mobile device is switched on in a cell.

When the mobile (communication) device is switched on, two states may be distinguished: active and idle. A mobile device is active when it is engaged in a telephone call. The device is idle when it is switched on but not engaged in a call. When a mobile device is switched on, it is typically active less than 5% of the time and is idle during the remaining time, that is, more than 95% of the time.
Registration in a location area (including re-registration in a new location area) takes places in both the active and the idle state.

Each cell has a unique identification. When a mobile device has selected a cell, for example the cell 3 in Fig. 1, on the basis of signal strength or another criterion, the mobile device can receive the identification of the cell from the central unit 1 via the cell's base station 4. In this way, the mobile device receives an indication of its location, as the area of the cell will typically be known. However, as a cell may have a diameter of a few hundreds meters, this location indication is very imprecise. In order to provide more accurate location information, additional information is required.

This additional information may be obtained by using cell changes (also known as cell transitions). When the mobile device of Fig. 1 moves from the current cell 3 to the adjacent cell 3', it will at some point select a new cell 3'. This transition clearly indicates that the mobile device moves in the area of overlap between the two cells 3 and 3', thus providing additional location information.

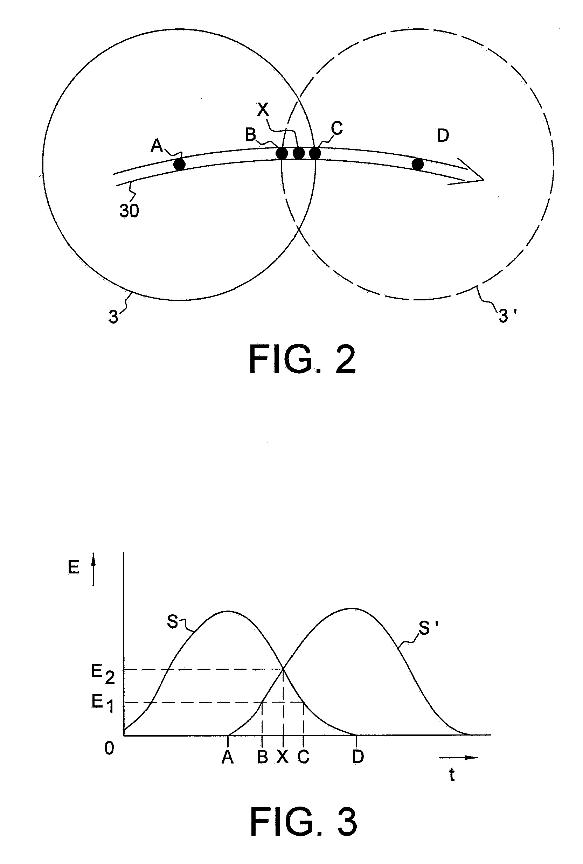

This is illustrated in Fig. 2, where the cells 3 and 3' are shown (for the sake of clarity of the illustration, the base stations 4 have been omitted). A mobile device (2 in Fig. 1) moves along a trajectory 30 from the original or current cell 3 to a new, adjacent cell 3'. The cells 3 and 3' have an overlapping area through which the trajectory passes. At a location B, the mobile device enters the new cell 3' and at a location C it leaves the original cell 3. At some point between locations B and C, for example at location X, the mobile device selects the new cell 3, thus cancelling its selection of the original cell 3. The resulting cell change may be used to determine the mobile device's location.

In Prior Art methods, the cell change is detected at the central unit where the current cell and/or location area associated with a particular mobile device is registered. In the method of the present invention, however, the cell change is (additionally or exclusively) detected by the mobile unit itself. To this end, the mobile unit is arranged for repeatedly monitoring the identification of the current cell. Upon detecting a change of the current cell, the mobile device sends a (location) message to the central unit, the (location) message containing the identification of the new cell 3'.

That is, as soon as the monitoring of the cell identification reveals that a selection of a new cell has occurred, or that the signal strength of a new cell exceeds the signal strength of the current cell, the mobile unit sends a location message to the central unit 1. The location message may therefore also be sent without a new cell being selected in case the signal strength of a new cell exceeds the signal strength of the current cell by a certain minimum amount, as this detection of greater signal strength also indicates a cell boundary. This minimum amount, which may be equal to zero, may be smaller than the minimum amount required to cause the selection of a new cell.

The location message may be a text message, such as an SMS or USSD message in the GSM system. A USSD message is preferred as the USSD message protocol does not provide store-and-forward facilities which can delay the transmission of the message. Location messages may comprise an identification of the mobile device, a new cell identification and optionally also an old cell identification. In the GSM system and similar mobile systems, the identification of the mobile device will typically comprise the identity of the SIM (Subscriber Identity Module).

In the central unit 1, data contained in the location message, together with the message's arrival time, are registered at the mobile switching centre 10 and/or at the location unit 11. As the times of receipt of the location messages are determined centrally, a uniform time registration is obtained that is independent of the internal clocks of the mobile devices. As a result, a very uniform registration of the cell transition times is obtained. It is noted that the mobile devices transmit location messages automatically upon detection of a cell transition or a cell boundary, without being polled by the central unit. In the present invention, polling is not required and may even be undesirable.

A non-limiting example of location data registered by the location unit is provided in Table 1 below:

**Table 1**

| No. | MOBILE ID | cELL id | time stamp (H:M:S) |
|---|---|---|---|
| 1 | PQ987654A5 | F911 | 7:54:12 |
| 2 | RS543210B7 | G245 | 7:55:11 |
| 3 | PQ987654A5 | F912 | 7:57:23 |
| 4 | PQ987654A5 | F913 | 7:59:02 |
| 5 | RT712349A7 | F321 | 7:59:09 |
| ... | ... | ... | ... |

As illustrated in this example, the location table compiled by the location unit may comprise an entry serial number (NO.), an identification of the mobile communication device (MOBILE ID), an identification of the new cell the mobile has entered (CELL ID), and the point in time at which the relevant location message was received by the central unit (TIME STAMP). Additional data, such as an identification of the previous cell, may optionally be included. In some embodiments, registration data indicating the location area in which a mobile device is currently registered may additionally be entered in the location table.

On the basis of the data registered in the location table, the location unit 11 determines the location of the mobile unit based upon the registered location messages, their times of receipt and predetermined cell data. The predetermined cell data may comprise stored maps and/or other data representing the cell boundaries. These cell data may be determined beforehand using a GPS (Global Positioning System) receiver and an HF receiver mounted in a vehicle. In the present invention, therefore, GPS may be used only to determine cell boundaries beforehand, not when determining the location of the mobile units. Instead of GPS, conventional surveying techniques may be used to determine the location of the cell boundaries. The HF receiver serves to determine the signal strength of the respective cells, the cell boundary being reached when the signal strength of the cell drops below a certain threshold.

In the present invention, cell changes are detected during when the mobile (communication) devices are idle. As noted above, mobile devices are typically idle more than 95% of the time they are switched on. However, the present invention may also be used when the mobile devices are active, that is, when carrying out a telephone call and/or sending or receiving a message.

In Fig. 2, the cell change occurs at a point X which is typically located between the points B (cell boundary of cell 3') and point C (cell boundary of cell 3), but may coincide with one of these points, for example point C when moving in the direction indicated. The change-over point X may be determined by the moment at which the mobile device selects the new cell 3', or by the moment when the signal strength of the new cell 3' exceeds the signal strength of the original cell 3 by a certain minimum amount (which may be equal to zero). It is noted that this signal strength is, in fact, the received signal strength of the transmitter of the cell's base station. The signal strength based cell transition detection is illustrated in more detail in Fig. 3.

In the example of Fig. 3 it is assumed that a mobile device (2 in Fig. 1) follows the trajectory 30 of Fig. 2 and moves from a current cell 3 to a new cell 3'. In Fig. 3, the signal strength (E) of the two cells, as detected by the mobile device, is plotted as a function of time (t). Originally, the mobile device is at location A in cell 3, where the signal strength of the current cell 3 (curve S) is at its peak while the signal strength of the new cell 3' (curve S') is virtually zero. When the mobile device reaches the point B, the signal strength of the new cell 3' has reached the threshold value E₁. In the example shown, the point X coincides with the point, and moment in time, where the signal values of the two cells have identical values E₂. At point C, the cell strength of the original (or "old") cell 3 has reaches the threshold value E₁, while at point D the signal strength of the original cell 3 will have virtually vanished while the signal strength of the new cell 3' is at its peak.

Accordingly, the cell transition will, in the present example, take place at or around the point X, where the cell strength of the new cell is equal to, and about to exceed the cell strength of the old cell. The cell transition will at the latest take place at the point C where the cell strength of the original cell 3 is decreasing and reaches the threshold value E₁.

It will be clear from Fig. 2 that the method and system of the present invention can advantageously be used for obtaining traffic data. If the trajectory 30 of Fig. 2 corresponds with a highway, and if the locations of a plurality of mobile devices are determined, then information with respect to the traffic on that highway may be obtained. The frequency of cell changes is indicative of the speed of mobile devices, and hence of vehicles, on the highway. The location unit, or another part of the central unit, may store a fingerprint of an itinerary. Matching this fingerprint with location data derived from cell transition data allows a particular itinerary to be recognised.

The present invention may not only be used for obtaining location information and/or traffic information, but also for road pricing. A method of road pricing according to the present invention comprises the method of obtaining location information discussed above. In addition, the method of road pricing may comprise the steps of determining when a mobile device enters a predetermined first cell and/or leaves a predetermined second cell. The first and second cells may serve as "toll gates": mobile devices passing through these cells will be charged, irrespective of their trajectory between these cells.

The present invention also provides suitable software programs. One such software program may be present in the location unit 11 to register location messages and the associated identification data. Another software program may be present in the mobile communication device, preferably in its SIM or equivalent identity module. The present invention accordingly also provides an identity module for a mobile communication device, the module being provided with a software program for carrying out method steps of the present invention.

The present invention is based upon the insight that the points in time at which cell changes occur should be determined at a central location, as the internal clocks of mobile communication devices are often not accurate. The present invention benefits from the further insight that cell transitions can be determined by mobile communication devices in idle mode when using the received signal strength of the base stations.

It is noted that any terms used in this document should not be construed so as to limit the scope of the present invention. In particular, the words "comprise(s)" and "comprising" are not meant to exclude any elements not specifically stated. Single elements may be substituted with multiple elements or with their equivalents.

It will be understood by those skilled in the art that the present invention is not limited to the embodiments illustrated above and that many modifications and additions may be made without departing from the scope of the invention as defined in the appending claims.

## Claims

1. A method of obtaining location information from at least one mobile communication device (2) in a system (100) for mobile communication comprising a central unit (1) capable of communicating with the mobile communication device, the method comprising the steps of:
• the mobile communication device repeatedly monitoring the identification of the current cell (3),
• the mobile communication device, upon detecting a change of the current cell, sending a location message to the central unit, the location message containing the identification of the new cell (3'),
• the central unit registering the location message together with its time of receipt, and
• the central unit determining the location of the mobile unit based upon the registered location messages, times of receipt and predetermined cell data.

2. The method according to claim 1, wherein the mobile communication device (2) is in idle mode.

3. The method according to claim 1 or 2, wherein cell transitions are detected on the basis of the signal strength of the cells.

4. The method according to any of the preceding claims, wherein the location messages are USSD messages or SMS messages.

5. The method according to any of the preceding claims, wherein the central unit (1) contains a location unit (11) for registering the location messages and their times of receipt, and for determining the location of a mobile communication device using the location messages and their times of receipt registered by the central unit.

6. The method according to any of the preceding claims, wherein the central unit (1) stores a fingerprint of an itinerary.

7. A computer program product for carrying out the method according to any of claims 1-6.

8. A computer program product according to claim 7, stored in an identity card of the mobile communication device.

9. A method of road pricing, comprising the location detection method according to any of claims 1-6.

10. A system (100) for mobile communication, comprising at least one mobile communication device (2) and a central unit (1) capable of communicating with the mobile communication device, wherein:
• the mobile communication device is arranged for repeatedly monitoring the identification of the current cell (3),
• the mobile communication device is arranged for, upon detecting a change of the current cell, sending a location message to the central unit, the location message containing the identification of the new cell (3'),
• the central unit is arranged for registering the location message together with its time of receipt, and
• the central unit is arranged for determining the location of the mobile unit based upon the registered location messages, times of receipt and predetermined cell data.

11. A device (2) for mobile communication, arranged for use in the method of any of claims 1-6 and/or the system of claim 10.

12. The device according to claim 11, comprising an identity module in which a software program is stored, the software program being designed to cause the device, upon detecting a change of the current cell, to send a location message to the central unit, the location message containing the identification of the new cell.
